# EUROPEAN PATENT APPLICATION

(11) **EP 4 236 428 A1**
(43) Date of publication of application: **30.08.2023**
(21) Application number: 21894058.3
(22) Date of filing: 22.11.2021
(51) Int. Cl.: H04W 24/02

(54) **COMMUNICATION DATA PROCESSING METHOD AND APPARATUS, AND COMMUNICATION DEVICE**

(30) Priority: 23.11.2020 CN 202011321231
(71) Applicant: Vivo Mobile Communication Co., Ltd., Dongguan, Guangdong 523863 (CN)
(72) Inventor: YANG, Ang, Dongguan, Guangdong 523863 (CN)
(74) Representative: Murgitroyd & Company
(86) International application number: PCT/CN2021/132050
(87) International publication number: WO 2022/105911

(57) **Abstract**

This application relates to the field of communications technologies and discloses a communications data processing method and apparatus, and a communications device. The method includes: A first communications device pre-processes first communications data in a pre-specified processing manner; and inputs the pre-processed first communications data to a target AI network to obtain second communications data, where the pre-specified processing manner includes at least one of an amplitude processing manner, a phase processing manner, and a transform domain processing manner.

## Description

### CROSS-REFERENCE

The present invention claims priority to Chinese Patent Application No. 202011321231.4 filed on November 23, 2020 and entitled "COMMUNICATIONS DATA PROCESSING METHOD AND APPARATUS, AND COMMUNICATIONS DEVICE", which is incorporated herein by reference in its entirety.

### TECHNICAL FIELD

This application relates to the field of communications technologies, and in particular, relates to a communications data processing method and apparatus, and a communications device.

### BACKGROUND

In related technologies of wireless communications, when communications data is processed using an artificial intelligence network (Artificial Intelligence Network, AIN, that is, an artificial neural network), problems such as a random phase shift and an amplitude bias, of communications data to be processed, due to impacts of various nonideal factors in an actual environment may appear, greatly affecting data processing performance of the AI network, and affecting performance of a wireless communications system.

### SUMMARY

Embodiments of this application provide a communications data processing method and apparatus, and a communications device that can at least resolve the problem that data processing performance of an AI network becomes poor due to impacts of various nonideal factors in an actual environment on communications data that is to be processed.

A first aspect provides a communications data processing method, performed by a first communications device. The method includes: A first communications device pre-processes first communications data in a pre-specified processing manner; and inputs the pre-processed first communications data to a target artificial intelligence AI network to obtain second communications data, where the pre-specified processing manner includes at least one of an amplitude processing manner, a phase processing manner, and a transform domain processing manner.

A second aspect provides a communications data processing apparatus. The apparatus includes: a first processing module, configured to pre-process first communications data in a pre-specified processing manner, where the pre-specified processing manner includes at least one of an amplitude processing manner, a phase processing manner, and a transform domain processing manner; and a second processing module, configured to input the pre-processed first communications data to a target artificial intelligence AI network to obtain second communications data.

A third aspect provides a terminal. The terminal includes a processor, a memory, and a program or an instruction stored in the memory and executable on the processor, where when the program or the instruction is executed by the processor, the steps of the method according to the first aspect are implemented.

A fourth aspect provides a readable storage medium. The readable storage medium stores a program or an instruction, and when the program or the instruction is executed by a processor, the steps of the method according to the first aspect are implemented.

A fifth aspect provides a chip. The chip includes a processor and a communications interface, the communications interface is coupled to the processor, and the processor is configured to run a program or an instruction of a network side device to implement the method according to the first aspect.

A sixth aspect provides a computer program product. The computer program product includes a processor, a memory, and a program or an instruction stored in the memory and executable on the processor, where when the program or the instruction is executed by the processor, the steps of the method according to the first aspect are implemented.

In the embodiments of this application, the communications device pre-processes the first communications data in the pre-specified processing manner first; and then inputs the pre-processed first communications data to the target artificial intelligence AI network to obtain the second communications data, where the pre-specified processing manner includes at least one of an amplitude processing manner, a phase processing manner, and a transform domain processing manner. In this way, the problem due to impacts of various nonideal factors in an actual environment on communications data that is to be processed can be effectively resolved, and data processing performance of an AI network is improved, so that performance of a wireless communications system is ensured.

### BRIEF DESCRIPTION OF DRAWINGS

FIG. 1 is a schematic diagram of a wireless communications system according to an example embodiment of this application;
FIG. 2 is a schematic flowchart of a communications data processing method according to an example embodiment of this application;
FIG. 3 is a schematic flowchart of a communications data processing method according to an example embodiment of this application;
FIG. 4 is a schematic flowchart of a communications data processing method according to an example embodiment of this application;
FIG. 5 is a schematic flowchart of a communications data processing method according to an example embodiment of this application;
FIG. 6a is a block diagram of a communications data processing apparatus according to an example embodiment of this application;
FIG. 6b is a block diagram of a communications data processing apparatus according to another example embodiment of this application;
FIG. 7 is a block diagram of a communications device according to an example embodiment of this application;
FIG. 8 is a block diagram of a terminal according to an example embodiment of this application; and
FIG. 9 is a block diagram of a network side device according to an example embodiment of this application.

### DESCRIPTION OF EMBODIMENTS

The following clearly describes technical solutions in embodiments of this application in conjunction with the accompanying drawings in the embodiments of this application. Clearly, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technology described in the embodiments of this application is not limited to a long term evolution (Long Time Evolution, LTE)/LTE-advanced (LTE-Advanced, LTE-A) system, and may also be used in various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, a New Radio (New Radio, NR) system is described below as an example, and the term NR is used in most of the descriptions, although these technologies can also be used in an application other than an application of the NR system, for example, a sixth (6th Generation, 6G) communications system.

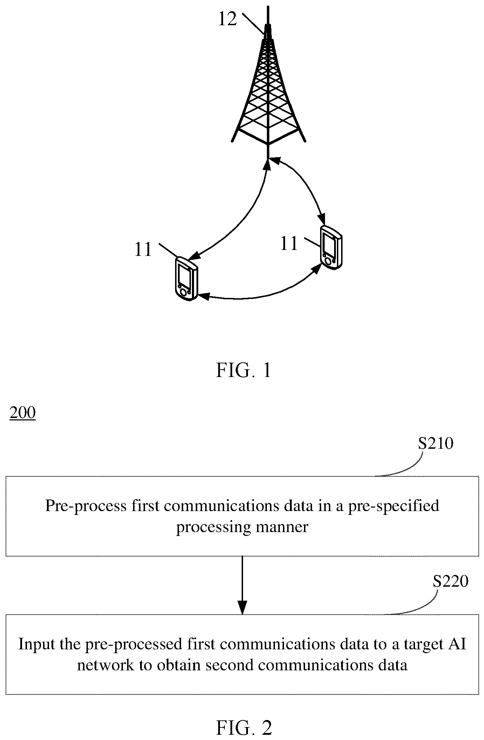

FIG. 1 is a schematic diagram of a wireless communications system to which an embodiment of this application can be applied. The wireless communications system includes a terminal 11 and a network side device 12. The terminal 11 may also be referred to as a terminal device or user equipment (User Equipment, UE). The terminal 11 may be a terminal side device, for example, a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in this embodiment of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

In conjunction with the accompanying drawings, the technical solutions provided in the embodiments of this application are described in detail by using specific embodiments and application scenarios.

FIG. 2 is a schematic flowchart of a communications data processing method 200 according to an example embodiment of this application. The method 200 may be applied to, but not limited to, a first communications device, for example, a terminal or a network side device, and may specifically be performed by software and/or hardware installed on the communications device. The method 200 at least includes the following steps.

S210: pre-processing first communications data in a pre-specified processing manner.

The first communications data is pre-processed, so that a problem, such as a random phase shift and an amplitude bias of communications data, due to impacts of nonideal factors in an actual communications environment on the data can be resolved, thereby ensuring accuracy of the communications data. In this embodiment, a corresponding pre-specified processing manner may be adopted based on an actual condition of the impacts of the nonideal factors in the actual communications environment on the data. For example, when a phase of the first communications data is impacted, the pre-specified processing manner may be a phase processing manner. For another example, when an amplitude of the first communications data is impacted, the pre-specified processing manner may be an amplitude processing manner.

In other words, based on an actual condition of the impacts of the nonideal factors in the actual communications environment on the data, the pre-specified processing manner may include at least one of a phase processing manner, an amplitude processing manner, and a transform domain processing manner. A specific implementation of the phase processing manner, the amplitude processing manner, and the transform domain processing manner may be specified based on a requirement. This is not limited herein.

In an implementation, the pre-specified processing manner may be determined by at least one of a configuration at a network side, a report of a terminal side, and default in a protocol. For example, M1 is default in the protocol, a device B reports that M2 is supported, M3 is configured by a device A, and/or the device B reports that M4 is to be selected. The device A and the device B is interchangeable. For example, the device A may be a network side device (or terminal), and the device B may be a terminal (or network side device). Several possible combinations for determining the pre-specified processing manner are provided below.
(1) M1 is default in the protocol, the device B reports that M2 in M1 is supported, and then M3 in M2 is configured by the device A, where any one of M3 is activated.
(2) M1 is default in the protocol, the device B reports that M2 in M1 is supported, and then one of M2 is configured by the device A.
(3) M1 is default in the protocol, and then M3 in M1 is configured by the device A, where any one of M3 is activated.
(4) M1 is default in the protocol, and then any one of M1 is configured by the device A.

It can be understood that in the foregoing four combinations, the any one that is finally determined is the foregoing pre-specified processing manner.

In addition, based on an actual communications requirement, the foregoing first communications data may at least include at least one of the following (1) to (10).
(1) A reference signal. The reference signal may be used in signal (that is, communications data) processing, for example, signal detection, signal filtering, and signal equalization. In this embodiment, the reference signal may be a demodulation reference signal (Demodulation Reference Signal, DMRS), a sounding reference signal (Sounding Reference Signal, SRS), a synchronization signal/physical broadcast channel block (Synchronization Signal and PBCH block, SSB), tracking reference signal (Tracking reference signal, TRS), phase-tracking reference signal (Phase-tracking reference signal, PTRS), CSI reference signal (CSI Reference Signal, CSI-RS), or the like.
(2) A signal carried on a channel, for example, a physical downlink control channel (Physical downlink control channel, PDCCH), a physical downlink shared channel (Physical downlink shared channel, PDSCH), a physical uplink control channel (Physical Uplink Control Channel, PUCCH), a physical uplink shared channel (Physical Uplink Shared Channel, PUSCH), a physical random access channel (Physical Random Access Channel, PRACH), or a physical broadcast channel (Physical broadcast channel, PBCH).
(3) Channel state information, for example, information about channel state information feedback and channel state information about uplink and downlink reciprocity in frequency division duplex (Frequency Division Duplex, FDD). The information about the channel state information feedback may include channel-related information, channel matrix-related information, channel characteristic information, channel matrix characteristic information, a precoding matrix indicator (Precoding matrix indicator, PMI), a rank indicator (Rank indicator, RI), a CSI-RS resource indicator (CSI-RS Resource Indicator, CRI), a channel quality indicator (Channel quality indicator, CQI), a layer indicator (Layer Indicator, LI), and the like.
   In addition, for an FDD system, based on partial reciprocity, a base station may obtain an angle, delay information, etc., through an uplink channel, and then notify, through CSI-RS precoding or direct indication, the angle information and the delay information, other channel state information with partial reciprocity, or directly estimated downlink channel information to a terminal. The terminal sends a report based on an indication of the base station or performs selection within a range indicated by the base station and sends a report, or the terminal uses these downlink channel signals, so that computation of the terminal and CSI reporting overheads are reduced.
(4) Beam information that may be used for beam management, for example, beam measurement, beam reporting, beam prediction, beam failure detection, beam failure recovery, and a new beam indication in beam failure recovery. In this embodiment, the beam information may include a beam quality, beam indication information (a reference signal identifier (ID)), beam failure recovery information, and new beam indication information in beam failure recovery.
(5) Channel estimation information that may include information about channel state information estimation, beam prediction information, etc.
(6) Interference information that may include intra-cell interference, inter-cell interference, out-of-band interference, cross modulation interference, etc.
(7) Positioning information, a specific position (including a horizontal position and/or a vertical position) of the terminal estimated by using a reference signal (for example, an SRS), auxiliary position estimation, or the like.
(8) Track information, a possible track of the terminal in the future estimated by using a reference signal (for example, an SRS), track estimation information, or the like.
(9) Specified estimation information and management information. The specified estimation information and management information refers to estimation information and management information corresponding to an upper-layer service and parameter, and may include a throughput, a size of a required data packet, a service requirement, a moving speed, noise information, etc.
(10) Control signaling, for example, signaling related to power control and signaling related to beam management.

It can be understood that the first communications data may include, but is not limited to, the foregoing (1) to (10), for example, may include only one or more of the foregoing (1) to (10), or may include another signal, or other information or signaling beyond the foregoing (1) to (10). This is not limited herein.

S220: inputting the pre-processed first communications data to a target AI network to obtain second communications data.

The target AI network (namely, the artificial intelligence network or artificial neural network) has been widely used in various fields, for example, in commonly seen neural networks. The target AI network is an algorithmic mathematical model, built by using neurons, imitating behavior features of neural networks of animals for parallel distributed information processing. The network achieves the purpose of information processing and gains self-learning and self-adaption capabilities by adjusting a connection relationship between a great quantity of neuron nodes inside with high complexity of the system. In this embodiment, a structure and a type of the target AI network are not limited, and may be determined based on an actual processing requirement during communications data processing. For example, the target AI network may alternatively be a decision tree, a support vector machine, a Bayes classifier, or the like.

In addition, the second communications data may be the same as or may be different from the first communications data. For example, the second communications data may include at least one of a reference signal, a signal carried on a channel, channel state information, beam information, channel estimation information, interference information, positioning information, track information, specified estimation information and management information, and control signaling. For a detailed description of the information included in the second communications data, refer to related descriptions of the first communications data. To avoid repetition, details are not described herein again.

In this embodiment, the first communications device pre-processes the first communications data in the pre-specified processing manner first; and then inputs the pre-processed first communications data to the target AI network to obtain the second communications data, where the pre-specified processing manner includes at least one of the amplitude processing manner, the phase processing manner, and the transform domain processing manner. In this way, the problem due to impacts of various nonideal factors in an actual environment on communications data that is to be processed can be effectively resolved, and data processing performance of an AI network is improved, so that performance of a wireless communications system is ensured.

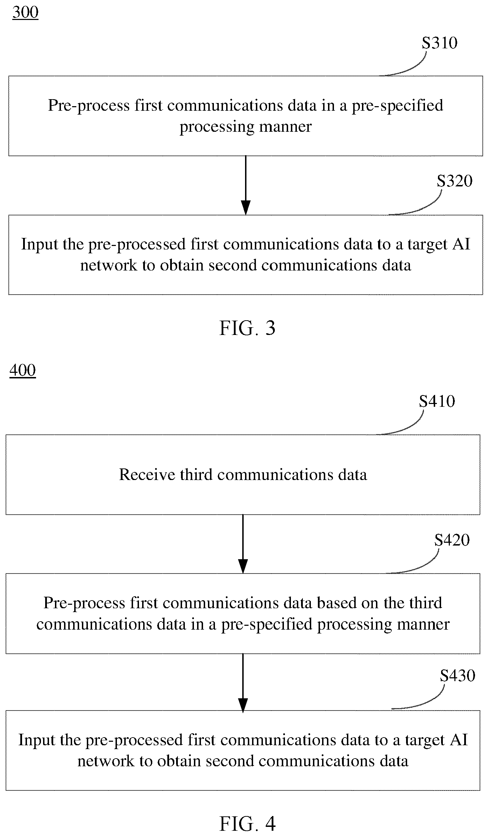

FIG. 3 is a schematic flowchart of a communications data processing method 300 according to an example embodiment of this application. The method 300 may be applied to, but not limited to, a first communications device, for example, a terminal or a network side device, and may specifically be performed by software and/or hardware installed on the communications device. The method 300 at least includes the following steps.

S310: pre-processing first communications data in a pre-specified processing manner.

For an implementation process of S310, refer to the foregoing related descriptions in S210. In addition, in a possible implementation, the implementation process of S310 may be different according to a different pre-specified processing manner. The implementation process of S310 is described with different examples below.

### Example 1

In a case in which the pre-specified processing manner is the amplitude processing manner, the first communications device may pre-process the first communications data with any one of the following (1) to (7). It should be noted that an amplitude in Example 1 may refer to an original amplitude.
(1) Processing a total power of the first communications data into a first pre-specified value (for example, a constant), where the first pre-specified value may be set as required.
(2) Processing an amplitude of each element in the first communications data into a second pre-specified value, for example, normalizing the amplitude of each element to 1.
(3) Processing a total input power of each subband in the first communications data into a third pre-specified value.
(4) Processing a total input power of each subband in the first communications data into a same value, where for example, the total power of each subband in the first communications data may not be a constant, for example, may be P1 at a previous moment and P2 at a next moment, but at a specific moment, the total power is the same.
(5) Processing a total input power of each subband in the first communications data into a value the same as a power of a first subband.
(6) Processing an amplitude of each element in each subband in the first communications data into a fourth pre-specified value, for example, normalizing the amplitude of each element to 1.
(7) Processing an amplitude of each element in another subband based on an amplitude of each element in the first subband, where the another subband is a subband, in the first communications data, other than the first subband. For example, an amplitude of an i^{th} element in a subband in the first communications data may be processed to be the same as an amplitude of an i^{th} element in the first subband.

The foregoing subband is obtained by dividing the first communications data based on a corresponding resource of subband. For example, a frequency-domain subband refers to division of the first communications data in a frequency domain resource manner based on a radio bearer (Radio Bearer, RB), a physical resource block (Physical Resource Block, PRB), a subband, a precoding resource block group (Precoding Resource block Group, PRG), a bandwidth part (Bandwidth Part, BWP), or the like. A time-domain subband refers to division of the first communications data in a time domain resource manner based on a subcarrier, a symbol, a slot, a half-slot, or the like. A code-domain subband refers to division of the first communications data in a code domain resource manner based on an orthogonal code, a quasi-orthogonal code, a semi-orthogonal code, or the like. A spatial-domain subband refers to division of the first communications data in a spatial domain resource manner based on an antenna, an antenna element, an antenna panel, a transmission and reception unit, a beam, a layer, a rank, an antenna angle, or the like.

In this case, the foregoing subband may be at least one of a time-domain subband, a frequency-domain subband, a code-domain subband, a spatial-domain subband, a delay-domain subband, a Doppler-domain subband, an angle-domain subband, an S-domain subband, and a Z-domain subband. The first subband may also include at least one of a time-domain subband, a frequency-domain subband, a code-domain subband, a spatial-domain subband, a delay-domain subband, a Doppler-domain subband, an angle-domain subband, an S-domain subband, and a Z-domain subband. The S-domain is domain obtained through the S transform, and the S transform is a classic transform in mathematics, and means that any signal may be decomposed into a plurality of different imaginary exponential components based on an imaginary exponential exp(jωt) as a basic signal in frequency domain analysis. This may also be another way of describing frequency domain. The Z-domain is domain obtained through the Z transform, and the Z transform is another classic transform in mathematics.

In this embodiment, as the first subband is a special subband as a reference for pre-processing the first communications data, that is, all subbands in the first communications data is pre-processed with reference to the first subband, the first subband may be any one of the following (1) to (9).
(1) A subband at a second pre-specified position in the first communications data, where the second pre-specified position may be the first subband, the last subband, the middlemost subband, or the like in the first communications data. It can be understood that, it is assumed that a quantity of subbands included in the first communications data is N2. In this case, the middlemost subband refers to a subband with an identifier (ID) that is (1+N2)/2. If (1+N2)/2 is not an integer, the identifier of the middlemost subband is (N2)/2 and/or (N2+2)/2.
(2) A subband with a highest total power in the first communications data.
(3) A subband, in the first communications data, in which an average amplitude of all elements is highest. An averaging method used for calculating an average amplitude may include a combination of linear averaging, multiplicative averaging, and another common averaging method, or may include a combination of addition, subtraction, multiplication, division, raising to the power K, a K^{th} root calculation, a logarithm, derivation, partial derivation, and various common mathematical operations. K is any number, for example, a positive number, a negative number, 0, a real number, or a complex number.
(4) A subband, in the first communications data, including a single element with a largest amplitude. It is assumed that the first communications data includes M subbands, and a subband with an identifier M' includes a single element with a largest amplitude. In this case, the first subband is the subband with the identifier M'.
(5) A subband, in the first communications data, including a single element with a largest power.
(6) A subband, in the first communications data, including a largest quantity of elements with an amplitude exceeding a first pre-specified threshold, where a value of the first pre-specified threshold may be set as required and is not limited herein.
(7) A subband, in the first communications data, including a largest quantity of elements with a power exceeding a second pre-specified threshold, where a value of the second pre-specified threshold may be set as required and is not limited herein.
(8) A subband that is in a specified element set and that is with a largest amplitude.
(9) A subband that is in a specified element set and that is with a largest power.

The specified element set in (8) and (9) may be determined based on the first communications data. For example, elements are sorted based on an amplitude/power in a subband in a descending order, and an element set including top N2 elements is the specified element set. Correspondingly, a subband that is in the specified element set and that is with a largest average amplitude or total power is the first subband. For an averaging method, refer to the descriptions in (3). Details are not provided herein again.

It should be noted that the foregoing first subband may be set by a configuration at a network side, default in a protocol, or autonomous setting of a terminal. This is not limited in this embodiment.

### Example 2

In a case in which the pre-specified processing manner is the phase processing manner, the first communications data is pre-processed with any one of the following (1) to (4).
(1) Normalizing a phase of each element in the first communications data based on a first element in the first communications data.

The first element is any one of the following (a) to (c).
(a) An element at a first pre-specified position in the first communications data, where the first pre-specified position may be the middlemost position in the first communications data, that is, the first element may be a middlemost element in the first communications data, and if there are two middlemost elements, may be a smaller one/a larger one/any one in the two elements. In addition, the first pre-specified position may also be the first position, the last position, or another specified position in the first communications data. This is not limited herein.
(b) An element with an amplitude of a fifth pre-specified value in the first communications data.
(c) An element with a power of a sixth pre-specified value in the first communications data.

The fifth pre-specified value and the sixth pre-specified value may be set as required. This is not limited herein.
(2) Processing a phase of each element in the first communications data into a same value, for example, processing the phase of each element in the first communications data into 0 degree, 90 degrees, 180 degrees, or another phase value.
(3) Normalizing a phase of another subband based on a first element in the first subband in the first communications data, where the another subband is a subband, in the first communications data, other than the first subband.

For example, each element in one subband times one single complex number uniformly to cause a uniform phase shift of each element in the subband, to ensure that a phase of a first element in the subband is a specific preset value.

IDs of first elements in various subbands may be the same or different. When IDs of elements with a largest amplitude/power in the subbands are different, the IDs of the first elements in the subbands may be different.

(4) For each subband included in the first communications data, normalizing a phase of an element in each of the subbands.

For example, for each subband included in the first communications data, a phase of another element in the subband may be normalized based on a first element in the subband. The another element is an element, in the subband, other than the first element. For example, it is assumed that a phase of the first element is 0. In this case, the phase of the another element in the subband may be normalized to 0 degree based on "0", that is, a phase of each pre-processed element is 0 degree.

It should be noted that, for detailed descriptions of the subband, the first subband, the first element, and the like in Example 2, refer to the related descriptions in the foregoing example. To avoid repetition, details are not described herein again.

### Example 3

In a case in which the pre-specified processing manner is the transform domain processing manner, the first communications device may perform the following (1) or (2) to pre-process the first communications data.
(1) Processing the first communications data in the pre-specified transform domain processing manner.

The pre-specified transform domain processing manner may include the Fourier transform, the fast Fourier transform (FFT), the discrete Fourier transform, the fractional Fourier transform, the short-time Fourier transform, the Laplace transform (Laplace method), the Z-transform, the wavelet transform, the discrete wavelet transform, and the continuous wavelet transform, and corresponding inverse transforms, that is, the inverse Fourier transform, the inverse fast Fourier transform (FFT), the inverse discrete Fourier transform, the inverse fractional Fourier transform, the inverse short-time Fourier transform, the inverse Laplace transform (Laplace method), the inverse Z-transform, the inverse wavelet transform, the inverse discrete wavelet transform, the inverse continuous wavelet transform, etc.

In addition, the pre-specified transform domain processing manner may further include time-domain transform, frequency-domain transform, S-domain transform (in S-domain, any signal may be decomposed into a plurality of different imaginary exponential components based on an imaginary exponential exp(jωt) as a basic signal in frequency domain analysis), Z-domain transform (domain obtained through the Z-transform), and the like, and inverse transforms of the transforms, that is, inverse time-domain transform, inverse frequency-domain transform, inverse S-domain transform, inverse Z-domain transform, and the like.

It should be noted that, in an implementation, the first communications data may alternatively be pre-processed with a combination of any two or three transforms and/or inverse transforms in the foregoing domain transforms.

(2) Processing at least one subband included in the first communications data in the pre-specified transform domain processing manner.

It should be noted that, in (1), when transform domain processing is performed, the first communications data, a total input, is an object to be processed, that is, the total input is used as a whole in transform domain processing (for example, FFT processing) to obtain a result corresponding to one FFT on the first communications data; and in (2), a subband included in the first communications data is an object to be processed, that is, if transform domain processing (for example, FFT processing) is performed on each subband included in the first communications data, results corresponding to a plurality of FFTs on various subbands.

The plurality of processing manners for pre-processing the first communications data provided in Example 1 to Example 3 may be combined in any manner or sorted in any sequence. For example, (1) transform domain+amplitude+phase, that is, first transform domain processing, then amplitude processing, and finally phase processing may be performed on the first communications data; (2) amplitude+phase; (3) amplitude+transform domain; or (4) phase+transform domain. It should be noted that the foregoing combinations and sequences are not enlisted in detail herein.

S320: inputting the pre-processed first communications data to a target AI network to obtain second communications data.

For an implementation of S320, refer to the foregoing descriptions of S220. To avoid repetition, details are not described herein again.

In this embodiment, the first communications data is pre-processed based on at least one of an amplitude, a phase, or transform domain, so that communications data processing performance can be further improved, and subsequent wireless communications performance is ensured.

FIG. 4 is a schematic flowchart of a communications data processing method 400 according to an example embodiment of this application. The method 400 may be applied to, but not limited to, a first communications device, for example, a terminal or a network side device, and may specifically be performed by software and/or hardware installed on the communications device. The method 400 at least includes the following steps.

S410: receiving third communications data.

The third communications data is data used for pre-processing the first communications data, and may be obtained by a same module of the first communications device that obtains the first communications data, or may be obtained by a different module. This is not limited herein.

In an implementation, the third communications data may be an ID, amplitude information, phase information, etc., of a first subband. The amplitude information may be original amplitude information, and/or information about a target amplitude to be normalized. This is not limited in this embodiment.

S420: pre-processing first communications data based on the third communications data in a pre-specified processing manner.

S430: inputting the pre-processed first communications data to a target AI network to obtain second communications data.

For an implementation process of S420 and S430, refer to the detailed descriptions in the foregoing method embodiments. To avoid repetition, details are not described herein again.

In this embodiment, the third communications data is received, and information used for pre-processing the first communications data is obtained, so that there is high flexibility in a communications data processing process.

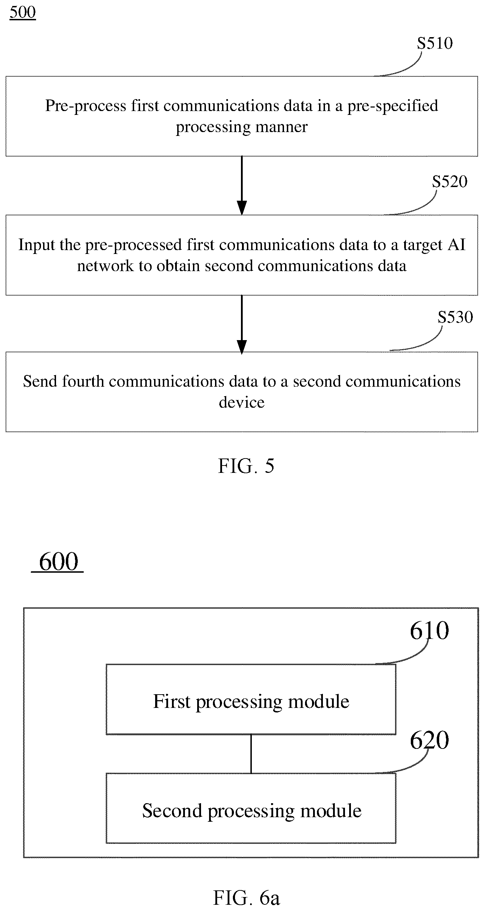

FIG. 5 is a schematic flowchart of a communications data processing method 500 according to an example embodiment of this application. The method 500 may be applied to, but not limited to, a first communications device, for example, a terminal or a network side device, and may specifically be performed by software and/or hardware installed on the communications device. The method 500 at least includes the following steps.

S510: pre-processing the first communications data in a pre-specified processing manner.

S520: inputting the pre-processed first communications data to a target AI network to obtain second communications data.

For an implementation process of S510 and S520, refer to the detailed descriptions in the foregoing method embodiments. To avoid repetition, details are not described herein again.

S530: sending fourth communications data to a second communications device.

The second communications device may be a terminal, or may be a network side device. In this embodiment, the first communications device is a terminal, and the second communications device is a network side device; the first communications device is a network side device, and the second communications device is a terminal; the first communications device and the second communications device are both network side devices; or the first communications device and the second communications device are both terminals. This is not limited in this embodiment.

In addition, the fourth communications data may include at least one of the pre-specified processing manner, the second communications data, and fifth communications data, and the fifth communications data is intermediate information obtained during pre-processing of the first communications data. The intermediate information is intermediate information obtained in a process in which the first communications data is pre-processed, for example, an original amplitude in amplitude normalization, an original power, an amplitude difference (an absolute difference and a relative difference), a power difference (an absolute difference and a relative difference), an original phase in phase normalization, and a phase difference (an absolute difference and a relative difference). This is not limited in this embodiment.

In this embodiment, after pre-processing of the first communications data is completed, by sending the fourth communications data to the second communications device, synchronization and consistency of information between the first communications device and the second communications device can be ensured, thereby improving wireless communications system performance.

It should be noted that the communications data processing method according to the embodiments of this application may be performed by a communications data processing apparatus, or a control module that is in the communications data processing apparatus and that is configured to perform the communications data processing method. In the embodiments of this application, that the communications data processing apparatus performs the communications data processing method is used as an example to describe the communications data processing apparatus provided in the embodiments of this application.

FIG. 6a is a block diagram of a communications data processing apparatus 600 according to an example embodiment of this application. The communications data processing apparatus 600 includes: a first processing module 610, configured to pre-process first communications data in a pre-specified processing manner, where the pre-specified processing manner includes at least one of an amplitude processing manner, a phase processing manner, and a transform domain processing manner; and a second processing module 620, configured to input the pre-processed first communications data to a target artificial intelligence AI network to obtain second communications data.

In a possible implementation, the first processing module is configured to: in a case in which the pre-specified processing manner is the amplitude processing manner, pre-process the first communications data with any one of the following processes: processing a total power of the first communications data into a first pre-specified value; processing an amplitude of each element in the first communications data into a second pre-specified value; processing a total input power of each subband in the first communications data into a third pre-specified value; processing a total input power of each subband in the first communications data into a same value; processing a total input power of each subband in the first communications data into a value the same as a power of a first subband; processing an amplitude of each element in each subband in the first communications data into a fourth pre-specified value; and processing an amplitude of each element in another subband based on an amplitude of each element in the first subband, where the another subband is a subband, in the first communications data, other than the first subband.

In a possible implementation, the first processing module is configured to: in a case in which the pre-specified processing manner is the phase processing manner, pre-process the first communications data with any one of the following processes: normalizing a phase of each element in the first communications data based on a first element in the first communications data; processing a phase of each element in the first communications data into a same value; normalizing a phase of another subband based on a first element in the first subband in the first communications data, where the another subband is a subband, in the first communications data, other than the first subband; and for each subband included in the first communications data, normalizing a phase of an element in each of the subbands.

In a possible implementation, the first element is any one of the following: an element at a first pre-specified position in the first communications data; an element with an amplitude of a fifth pre-specified value in the first communications data; and an element with a power of a sixth pre-specified value in the first communications data.

In a possible implementation, the first subband is any one of the following: a subband at a second pre-specified position in the first communications data; a subband with a highest total power in the first communications data; a subband, in the first communications data, in which an average amplitude of all elements is highest; a subband, in the first communications data, including a single element with a largest amplitude; a subband, in the first communications data, including a single element with a largest power; a subband including a largest quantity of elements with an amplitude exceeding a first pre-specified threshold; a subband including a largest quantity of elements with a power exceeding a second pre-specified threshold; a subband that is in a specified element set and that is with a largest amplitude; and a subband that is in a specified element set and that is with a largest power, where the specified element set is determined based on the first communications data.

In a possible implementation, the first subband includes at least one of a time-domain subband, a frequency-domain subband, a code-domain subband, a spatial-domain subband, a delay-domain subband, a Doppler-domain subband, an angle-domain subband, an S-domain subband, and a Z-domain subband.

In a possible implementation, the first processing module is configured to: is configured to: in a case in which the pre-specified processing manner is the transform domain processing manner, perform any one of the following: processing the first communications data in the pre-specified transform domain processing manner; and processing at least one subband included in the first communications data in the pre-specified transform domain processing manner.

In a possible implementation, the first communications data includes at least one of a reference signal, a signal carried on a channel, channel state information, beam information, channel estimation information, interference information, positioning information, track information, specified estimation information and management information, and control signaling; and/or the second communications data includes at least one of a reference signal, a signal carried on a channel, channel state information, beam information, channel estimation information, interference information, positioning information, track information, specified estimation information and management information, and control signaling.

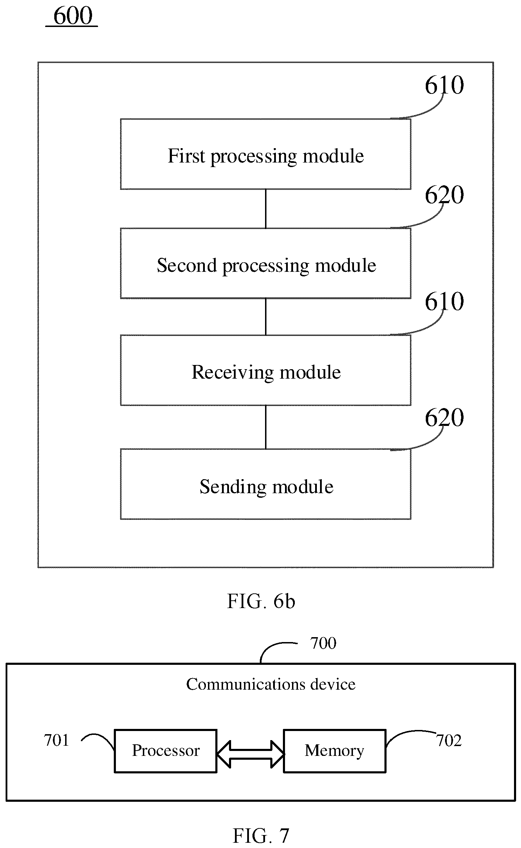

In a possible implementation, with reference to FIG. 6b, the apparatus 600 further includes a receiving module 630, configured to receive third communications data, where the third communications data is data used for pre-processing the first communications data; and the first processing module 610 is further configured to pre-process the first communications data based on the third communications data in the pre-specified processing manner.

In a possible implementation, again with reference to FIG. 6b, the apparatus 600 further includes a sending module 640, configured to send fourth communications data to a second communications device, where the fourth communications data includes at least one of the pre-specified processing manner, the second communications data, and fifth communications data, and the fifth communications data is intermediate information obtained during pre-processing of the first communications data.

In a possible implementation, the pre-specified processing manner is determined by at least one of the following: being configured at a network side; being reported at a terminal side; and being set to default in a protocol.

The communications data processing apparatus 600 in this embodiment of this application may be an apparatus, or may be a component, an integrated circuit, or a chip in a terminal. The apparatus may be a mobile terminal, or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The communications data processing apparatus 600 in this embodiment of this application may be an apparatus with an operating system. The operating system may be an Android (Android) operating system, may be an iOS operating system, or may be another possible operating system. This is not specifically limited in this embodiment of this application.

The communications data processing apparatus 600 provided in this embodiment of this application can implement the processes implemented in the method embodiments in FIG. 2 to FIG. 5, with the same technical effect achieved. To avoid repetition, details are not described herein again.

As shown in FIG. 7, an embodiment of this application further provides a communications device 700, including a processor 701, a memory 702, a program or an instruction that is stored in the memory 702 and that can run on the processor 701. For example, when the communications device 700 is a terminal, the program or the instruction is executed by the processor 701 to implement each process in communications data processing method embodiments, with the same technical effect achieved. When the communications device 700 is a network side device, when the program or the instruction is executed by the processor 701, the processes in the communications data processing method embodiment are implemented, with the same technical effect achieved. To avoid repetition, details are not provided herein again.

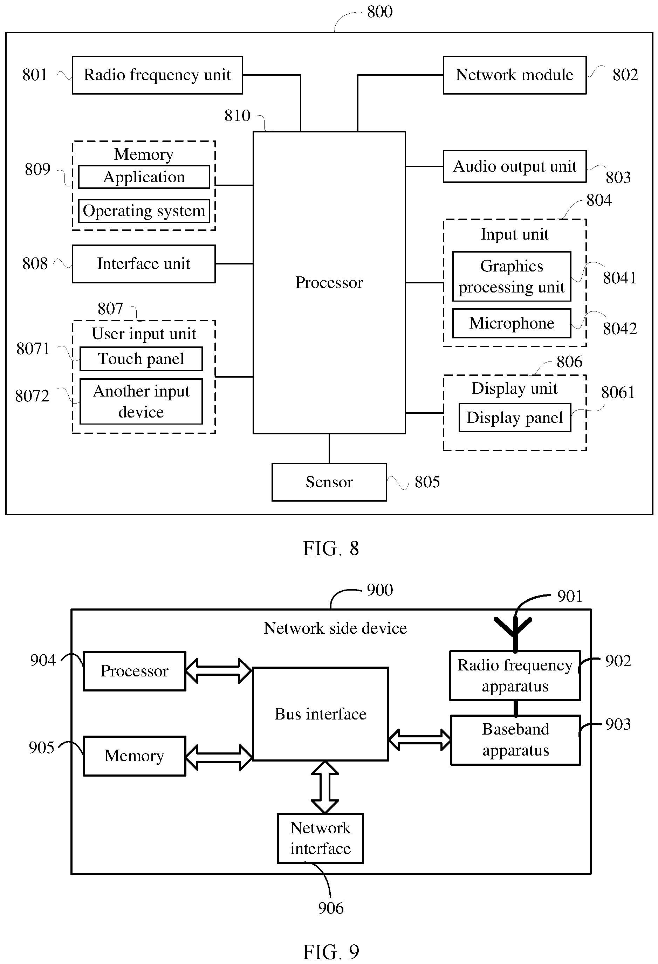

In a possible implementation, the communications device 700 may be a terminal. For example, FIG. 8 is a schematic diagram of a hardware structure of a terminal according to an embodiment of this application. The terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (for example, a camera) in a video capture mode or an image capture mode. The display unit 806 may include a display panel 8061, and the display panel 8061 may be configured in a form of a liquid crystal display, an organic light-emitting diode, or the like. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area. The program or instruction storage area may store an operating system, and an application program or an instruction required by at least one function (for example, a sound playing function or an image playing function). In addition, the memory 809 may include a high speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, an application processor and a modem processor may be integrated into the processor 810. The application processor mainly processes an operating system, a user interface, an application, an instruction, or the like. The modem processor mainly processes wireless communications, for example, a baseband processor. It can be understood that, alternatively, the modem processor may not be integrated into the processor 810.

The processor 810 is configured to: pre-process first communications data in a pre-specified processing manner; and input the pre-processed first communications data to a target artificial intelligence AI network to obtain second communications data, where the pre-specified processing manner includes at least one of an amplitude processing manner, a phase processing manner, and a transform domain processing manner.

In this embodiment of this application, the first communications data is pre-processed in the pre-specified processing manner first; and then the pre-processed first communications data is input to the target AI network to obtain the second communications data, where the pre-specified processing manner includes at least one of the amplitude processing manner, the phase processing manner, and the transform domain processing manner. In this way, the problem due to impacts of various nonideal factors in an actual environment on communications data that is to be processed can be effectively resolved, and data processing performance of an AI network is improved, so that performance of a wireless communications system is ensured.

In another possible implementation, the communications device 700 may alternatively be a network side device. For example, FIG. 9 is a block diagram of a network side device according to an example embodiment of this application. The network device 900 includes an antenna 901, a radio frequency apparatus 902, and a baseband apparatus 903. The antenna 901 is connected to the radio frequency apparatus 902. In an uplink direction, the radio frequency apparatus 902 receives information through the antenna 901, and sends the received information to the baseband apparatus 903 for processing. In a downlink direction, the baseband apparatus 903 processes information to be sent and transmits the information to the radio frequency apparatus 902, and the radio frequency apparatus 902 processes the received information and then transmits the information through the antenna 901.

The foregoing band processing apparatus may be located in the baseband apparatus 903, and the method performed by the network side device in the foregoing embodiment may be implemented in the baseband apparatus 903. The baseband apparatus 903 includes a processor 904 and a memory 905.

The baseband apparatus 903 may include, for example, at least one baseband board, where a plurality of chips are disposed on the baseband board. As shown in FIG. 9, one chip is, for example, the processor 904, which is connected to the memory 905, so as to invoke a program in the memory 905 to perform operations of the network device shown in the foregoing method embodiment.

The baseband apparatus 903 may further include a network interface 906, configured to exchange information with the radio frequency apparatus 902, where the interface is, for example, a common public radio interface (common public radio interface, CPRI for short).

Specifically, the network side device in this embodiment of the present invention further includes an instruction or a program that is stored in the memory 905 and that can be run on the processor 904. The processor 904 invokes the instruction or the program in the memory 905 to perform the method performed by the modules shown in FIG. 6a and FIG. 6b, with the same technical effect achieved. To avoid repetition, details are not described herein again.

An embodiment of this application further provides a readable storage medium, where the readable storage medium stores a program or an instruction, and when the program or the instruction is executed by a processor, the processes of the foregoing communications data processing method embodiments are implemented, with the same technical effect achieved. To avoid repetition, details are not described herein again.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communications interface, the communications interface is coupled to the processor, and the processor is configured to run a program or an instruction of a network side device to implement the processes of the foregoing communications data processing method embodiments, with the same technical effect achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product includes a processor, a memory, and a program or an instruction stored in the memory and executable on the processor, where when the program or the instruction is executed by the processor, the processes of the foregoing communications data processing method embodiments are implemented, with the same technical effect achieved. To avoid repetition, details are not described herein again.

It should be noted that, in this specification, the terms "include", "comprise", or any other variant thereof are intended to cover a non-exclusive inclusion, so that a process, a method, an article, or an apparatus that includes a list of elements not only includes those elements but also includes other elements which are not expressly listed, or further includes elements inherent to such a process, method, article, or apparatus. An element limited by "includes a ..." does not, without more constraints, preclude the presence of additional identical elements in the process, method, article, or apparatus that includes the element. In addition, it should be noted that a scope of the method and the apparatus in the implementations of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of this application.

The embodiments of this application are described above in conjunction with the accompanying drawings, but this application is not limited to the above specific implementations, and the above specific implementations are only illustrative and not restrictive. Enlightened by this application, a person of ordinary skill in the art can make many forms without departing from the purpose of this application and the protection scope of the claims, all of which shall fall within the protection of this application.

## Claims

1. A communications data processing method, performed by a first communications device, wherein the method comprises:
pre-processing first communications data in a pre-specified processing manner; and
inputting pre-processed first communications data to a target artificial intelligence AI network to obtain second communications data, wherein
the pre-specified processing manner comprises at least one of an amplitude processing manner, a phase processing manner, and a transform domain processing manner.

2. The method according to claim 1, wherein the pre-processing first communications data in a pre-specified processing manner comprises:
in a case in which the pre-specified processing manner is the amplitude processing manner, pre-processing the first communications data with any one of the following processes:
processing a total power of the first communications data into a first pre-specified value;
processing an amplitude of each element in the first communications data into a second pre-specified value;
processing a total input power of each subband in the first communications data into a third pre-specified value;
processing a total input power of each subband in the first communications data into a same value;
processing a total input power of each subband in the first communications data into a value the same as a power of a first subband;
processing an amplitude of each element in each subband in the first communications data into a fourth pre-specified value; and
processing an amplitude of each element in another subband based on an amplitude of each element in the first subband, wherein the another subband is a subband, in the first communications data, other than the first subband.

3. The method according to claim 1, wherein the pre-processing first communications data in a pre-specified processing manner comprises:
in a case in which the pre-specified processing manner is the phase processing manner, pre-processing the first communications data with any one of the following processes:
normalizing a phase of each element in the first communications data based on a first element in the first communications data;
processing a phase of each element in the first communications data into a same value;
normalizing a phase of another subband based on a first element in the first subband in the first communications data, wherein the another subband is a subband, in the first communications data, other than the first subband; and
for each subband comprised in the first communications data, normalizing a phase of an element in each of the subbands.

4. The method according to claim 3, wherein the first element is any one of the following:
an element at a first pre-specified position in the first communications data;
an element with an amplitude of a fifth pre-specified value in the first communications data; and
an element with a power of a sixth pre-specified value in the first communications data.

5. The method according to claim 2 or 3, wherein the first subband is any one of the following:
a subband at a second pre-specified position in the first communications data;
a subband with a highest total power in the first communications data;
a subband, in the first communications data, in which an average amplitude of all elements is highest;
a subband, in the first communications data, comprising a single element with a largest amplitude;
a subband, in the first communications data, comprising a single element with a largest power;
a subband, in the first communications data, comprising a largest quantity of elements with an amplitude exceeding a first pre-specified threshold;
a subband, in the first communications data, comprising a largest quantity of elements with a power exceeding a second pre-specified threshold;
a subband that is in a specified element set and that is with a largest amplitude; and
a subband that is in a specified element set and that is with a largest power, wherein
the specified element set is determined based on the first communications data.

6. The method according to claim 5, wherein the first subband comprises at least one of a time-domain subband, a frequency-domain subband, a code-domain subband, a spatial-domain subband, a delay-domain subband, a Doppler-domain subband, an angle-domain subband, an S-domain subband, and a Z-domain subband.

7. The method according to claim 1, wherein the pre-processing first communications data in a pre-specified processing manner comprises:
in a case in which the pre-specified processing manner is the transform domain processing manner, performing any one of the following:
processing the first communications data in the pre-specified transform domain processing manner; and
processing at least one subband comprised in the first communications data in the pre-specified transform domain processing manner.

8. The method according to claim 1, wherein the first communications data comprises at least one of a reference signal, a signal carried on a channel, channel state information, beam information, channel estimation information, interference information, positioning information, track information, specified estimation information and management information, and control signaling; and/or
the second communications data comprises at least one of a reference signal, a signal carried on a channel, channel state information, beam information, channel estimation information, interference information, positioning information, track information, specified estimation information and management information, and control signaling.

9. The method according to claim 1, wherein before the pre-processing first communications data in a pre-specified processing manner, the method further comprises:
receiving third communications data, wherein the third communications data is data used for pre-processing the first communications data; and
the pre-processing first communications data in a pre-specified processing manner comprises:
pre-processing the first communications data based on the third communications data in the pre-specified processing manner.

10. The method according to claim 1, wherein the method further comprises:
sending fourth communications data to a second communications device, wherein
the fourth communications data comprises at least one of the pre-specified processing manner, the second communications data, and fifth communications data, and the fifth communications data is intermediate information obtained during pre-processing of the first communications data.

11. The method according to claim 1, wherein the pre-specified processing manner is determined by at least one of the following:
being configured at a network side;
being reported at a terminal side; and
being set to default in a protocol.

12. A communications data processing apparatus, wherein the apparatus comprises:
a first processing module, configured to pre-process first communications data in a pre-specified processing manner, wherein the pre-specified processing manner comprises at least one of an amplitude processing manner, a phase processing manner, and a transform domain processing manner; and
a second processing module, configured to input pre-processed first communications data to a target artificial intelligence AI network to obtain second communications data.

13. The apparatus according to claim 12, wherein the first processing module is configured to: in a case in which the pre-specified processing manner is the amplitude processing manner, pre-process the first communications data with any one of the following processes:
processing a total power of the first communications data into a first pre-specified value;
processing an amplitude of each element in the first communications data into a second pre-specified value;
processing a total input power of each subband in the first communications data into a third pre-specified value;
processing a total input power of each subband in the first communications data into a same value;
processing a total input power of each subband in the first communications data into a value the same as a power of a first subband;
processing an amplitude of each element in each subband in the first communications data into a fourth pre-specified value; and
processing an amplitude of each element in another subband based on an amplitude of each element in the first subband, wherein the another subband is a subband, in the first communications data, other than the first subband.

14. The apparatus according to claim 12, wherein the first processing module is configured to: in a case in which the pre-specified processing manner is the phase processing manner, pre-process the first communications data with any one of the following processes:
normalizing a phase of each element in the first communications data based on a first element in the first communications data;
processing a phase of each element in the first communications data into a same value;
normalizing a phase of another subband based on a first element in the first subband in the first communications data, wherein the another subband is a subband, in the first communications data, other than the first subband; and
for each subband comprised in the first communications data, normalizing a phase of an element in each of the subbands.

15. The apparatus according to claim 14, wherein the first element is any one of the following:
an element at a first pre-specified position in the first communications data;
an element with an amplitude of a fifth pre-specified value in the first communications data; and
an element with a power of a sixth pre-specified value in the first communications data.

16. The apparatus according to claim 13 or 14, wherein the first subband is any one of the following:
a subband at a second pre-specified position in the first communications data;
a subband with a highest total power in the first communications data;
a subband, in the first communications data, in which an average amplitude of all elements is highest;
a subband, in the first communications data, comprising a single element with a largest amplitude;
a subband, in the first communications data, comprising a single element with a largest power;
a subband, in the first communications data, comprising a largest quantity of elements with an amplitude exceeding a first pre-specified threshold;
a subband, in the first communications data, comprising a largest quantity of elements with a power exceeding a second pre-specified threshold;
a subband that is in a specified element set and that is with a largest amplitude; and
a subband that is in a specified element set and that is with a largest power, wherein
the specified element set is determined based on the first communications data.

17. The apparatus according to claim 16, wherein the first subband comprises at least one of a time-domain subband, a frequency-domain subband, a code-domain subband, a spatial-domain subband, a delay-domain subband, a Doppler-domain subband, an angle-domain subband, an S-domain subband, and a Z-domain subband.

18. The apparatus according to claim 12, wherein the first processing module is configured to: in a case in which the pre-specified processing manner is the transform domain processing manner, perform any one of the following:
processing the first communications data in the pre-specified transform domain processing manner; and
processing at least one subband comprised in the first communications data in the pre-specified transform domain processing manner.

19. The apparatus according to claim 12, wherein the first communications data comprises at least one of a reference signal, a signal carried on a channel, channel state information, beam information, channel estimation information, interference information, positioning information, track information, specified estimation information and management information, and control signaling; and/or
the second communications data comprises at least one of a reference signal, a signal carried on a channel, channel state information, beam information, channel estimation information, interference information, positioning information, track information, specified estimation information and management information, and control signaling.

20. The apparatus according to claim 12, wherein the apparatus further comprises:
a receiving module, configured to receive third communications data, wherein the third communications data is data used for pre-processing the first communications data; and
the first processing module is configured to pre-process the first communications data based on the third communications data in the pre-specified processing manner.

21. The apparatus according to claim 12, wherein the apparatus further comprises:
a sending module, configured to send fourth communications data to a second communications device, wherein the fourth communications data comprises at least one of the pre-specified processing manner, the second communications data, and fifth communications data, and the fifth communications data is intermediate information obtained during pre-processing of the first communications data.

22. The apparatus according to claim 12, wherein the pre-specified processing manner is determined by at least one of the following:
being configured at a network side;
being reported at a terminal side; and
being set to default in a protocol.

23. A communications device, comprising a processor, a memory, and a program or an instruction stored in the memory and executable on the processor, wherein when the program or the instruction is executed by the processor, steps of the communications data processing method according to any one of claims 1 to 11 are implemented.

24. A readable storage medium, wherein the readable storage medium stores a program or an instruction, and when the program or the instruction is executed by a processor, steps of the communications data processing method according to any one of claims 1 to 11 are implemented.
